# EUROPÄISCHE PATENTSCHRIFT

(11) **EP 0 627 974 B1**
(45) Veröffentlichungstag und Bekanntmachung des Hinweises auf die Patenterteilung: **15.11.1995**
(21) Anmeldenummer: 93903963.2
(22) Anmeldetag: 12.02.1993
(51) Int. Cl.: B25G 1/10, B29C 70/68, B29C 45/14

(54) **VERFAHREN ZUR HERSTELLUNG EINES WERKZEUGHANDGRIFFES UND WERKZEUG ZUR DURCHFÜHRUNG DES VERFAHRENS**
PROCESS FOR MANUFACTURING A TOOL HANDLE AND TOOL FOR CARRYING OUT SAID PROCESS
PROCEDE DE FABRICATION D'UN MANCHE D'OUTIL ET OUTIL PERMETTANT DE METTRE LE PROCEDE EN UVRE

(30) Priorität: 24.02.1992 DE 4205610
(43) Veröffentlichungstag der Anmeldung: 14.12.1994
(73) Patentinhaber: FELO-WERKZEUGFABRIK HOLLAND-LETZ GMBH, D-35279 Neustadt (DE)
(72) Erfinder: HOLLAND-LETZ, Horst, D-3577 Neustadt (DE)
(86) Internationale Anmeldenummer: EP9300343
(87) Internationale Veröffentlichungsnummer: WO9316846

(56) Entgegenhaltungen:
- EP-A- 0 358 883
- DE-U- 8 907 900
- US-A- 2 529 091
- US-A- 2 604 661
- US-A- 2 985 209
- PLASTVERARBEITER Bd. 16, Nr. 5, Mai 1965, SPEYER/RHEIN Seite 262 W.MINK 'SPRITZGUSS WERKZEUGE'

## Beschreibung

Die Erfindung betrifft ein Verfahren zur Herstellung eines Werkzeughandgriffes, insbesondere für einen Schraubendreher, der einen aus Hartkunststoff in einer ersten geteilten Form hergestellten Griffkern mit einem klingenabgewandten, balligem Endstück und eine, den Griffkern ohne das Endstück einschließende Ummantelung aus Weichkunststoff aufweist, in deren Oberfläche mindestens eine Vertiefung, wie eine Griffmulde, eingeformt ist.

Werkzeughandgriffe dieser Art sind den ergonomischen Anforderungen bei Arbeiten mit den entsprechenden Werkzeugen angepaßt. So bildet das ballige Endstück eine Stützfläche, auf die der Benutzer des Schraubendrehers während des Lösens und Anziehens von Schrauben sich mit seinem Handballen abstützt, um zusätzlich zu dem Drehmoment eine Druckkraft in axialer Richtung des Schraubendrehers auf die Schraube aufzubringen. Diese Druckkraft ist erforderlich, um den Schraubendreher sicher in Eingriff mit der Schraube zu halten.

Es ist ein Werkzeughandgriff bekannt, bei dessen Herstellung zunächst ein Griffkern aus Hartkunststoff gefertigt wird (US-A-2,871,899). Auf diesen Griffkern wird dann eine vorgefertigte Ummantelung aus Weichkunststoff aufgezogen. Dabei sind diese beiden Teile über Profilierungen auf der Innenseite der Ummantelung und auf dem Griffkern formschlüssig miteinander verbunden.

Der Vorteil des bekannten Handgriffes besteht einerseits in seiner durch die Verwendung von Weichkunststoff im Bereich der Griffläche verbesserten Griffigkeit. Gleichzeitig weist der Handgriff aufgrund des harten Kunststoffkernes eine hohe Festigkeit auf. Bei der praktischen Erprobung des bekannten Handgriffes hat sich jedoch gezeigt, daß die weiche Ummantelung bei schweren Beanspruchungen von dem harten Griffkern abhebt und Falten bildet. Dieses "Walken" genannte Abheben der Ummantelung von dem Griffkern führt insbesondere bei Dauerbenutzung des bekannten Handgriffes zu schmerzhafter Blasenbildung im Bereich der Handfläche des Benutzers und zu einer Entzündungen verursachenden überhöhten Belastung der Handknochen.

Ein weiterer, vielen anderen bekannten Werkzeughandgriffen mit einem Kern aus Hartkunststoff gemeinsamer Nachteil besteht darin, daß bei ihrer Herstellung in der Abstützfläche des Endstückes eine Naht entsteht. Die Entstehung dieser Naht läßt sich bei herkömmlichen Herstellungsverfahren aufgrund der Längsteilung der dabei verwendeten Formen nicht vermeiden. Es ist daher versucht worden, dieses Problem durch eine Teilung der Form in eine normal zur Handgriffachse angeordneten Ebene zu umgehen (EP-A-0 358 883). Der mit dieser Herstellung einhergehende Nachteil besteht darin, daß sich damit nur Handgrifformen herstellen lassen, die keine Hinterschneidungen aufweisen. Hinterschneidungen an Handgriffen entstehen aber immer dann, wenn ein Handgriff zur Verbesserung der Handhabung und der Übertragung der Kraft von der Hand auf den Griff mit Mulden oder Einschnürungen versehen ist.

Ferner ist ein Werkzeughandgriff für einen Schraubendreher bekannt, bei dem die Klinge des Schraubendrehers unlösbar in einem Kern aus stoßfestem Kunststoff gegossen ist (DE-U-8 907 900). Dieser Kern ist von einer Schicht aus Weichkunststoff umhüllt, die gegebenenfalls spritzgegossen ist. Nachteilig bei diesem Schraubendrehergriff ist, daß sein balliges Ende nicht hart ist, so daß er einer erhöhten Beanspruchung durch Schläge nicht ausgesetzt werden kann und bei axialem Druck durch die Hand die Handinnenfläche sehr beansprucht.

Die Aufgabe der Erfindung besteht darin, ein Verfahren zur Herstellung eines Handgriffes der eingangs genannten Art zu entwickeln, dessen Endstück eine nahtfreie Stützfläche hat und dessen Griffkern und Ummantelung vollflächig dauerhaft verbunden sind. Darüber hinaus ist ein Werkzeug zur Durchführung dieses Verfahrens zu schaffen.

Diese Aufgabe wird erfindungsgemäß dadurch gelöst, daß bei der Herstellung des Griffkernes das ballige Endstück mit Hilfe eines in der ersten Form angeordneten Formkernes geformt wird, der eine in seiner Stirnseite eingeformte nahtfreie Ausnehmung aufweist, und daß anschließend der Griffkern in einer zweiten axial längsgeteilten Form mit einer dem Endstück angepaßten konkaven Ausnehmung mit dem Weichkunststoff der Umhüllung unter Einwirkung einer zur Ausnehmung gerichteten axialen Druckkraft umspritzt wird, wobei das bündig in der Ausnehmung einsitzende ballige Endstück gegenüber dem Weichkunststoff abgedichtet ist und sich der Hartkunststoff des Griffkernes mit dem Weichkunststoff der Ummantelung während des Umspritzens stoffschlüssig verbindet.

Bei Anwendung des erfindungsgemäßen Verfahrens erhält man einen Werkzeughandgriff, an dessen Griffkern aus Hartkunststoff ein einstückig mit diesem verbundenes Endstück mit einer nahtfreien Oberfläche angeformt ist. Da das Endstück während des Umspritzens des Griffkernes mit Weichkunststoff zudem gegenüber diesem abgedichtet ist, ist ausgeschlossen, daß die Oberfläche des Endstückes bei der Fertigstellung des Handgriffes vom Weichkunststoff der Griffkernumhüllung benetzt wird. Schließlich entsteht zwischen dem Kunststoff des Griffkernes und dem Weichkunststoff der Umhüllung schon während des Umspritzens des Griffkernes eine innige, unlösbare stoffschlüssige, vollflächige Verbindung, die mit einem Verschweißen der beiden Kunststoffe vergleichbar ist. Durch das erfindungsgemäße Verfahren ist folglich in nur zwei Verfahrensschritten ein Handgriff herstellbar, der aufgrund der glatten Oberfläche des Endstückes, der durch den Weichkunststoff erhöhten Griffigkeit und der festen, unlösbaren Verbindung zwischen Griffkern und Umhüllung eine hohe Funktionalität aufweist. Dies führt dazu, daß bei Verwendung des erfindungsgemäß hergestellten Handgriffes die Gefahr einer Verletzung des Benutzers auch bei schwerer Dauerbelastung der Hand und des Werkzeuges gegenüber bekannten Werkzeughandgriffen mit einem ähnlichen Aufbau erheblich vermindert ist.

Die Sicherheit der Abdichtung des Endstückes in der zweiten Form kann dadurch verbessert werden, daß der größte Durchmesser des balligen Endstückes um ein geringes Übermaß größer ist, als der entsprechende Durchmeser der konkaven Ausnehmung der zweiten Form. In diesem Fall wird der über die Ausnehmung der zweiten Form hinausreichende Bereich des Endstückes bei Einwirkung der in axiale Richtung des Griffkernes gerichteten Druckkraft zusammengedrückt, so daß zwischen den Wänden der Ausnehmung und dem Endstück eine erhöhte Pressung und damit eine gute Abdichtung gegenüber dem Weichkunststoff bei dessen Umspritzen besteht.

Alternativ oder ergänzend zu der vorangegangenen Maßnahme kann eine Verbesserung der Abdichtung des Endstückes gegenüber dem Weichkunststoff auch dadurch erzielt werden, daß beim Formen des Endstückes dessen Randbereich kegelstumpfförmig abgeflacht wird. Bei dieser Ausgestaltung der Erfindung wird während der Fertigung des Griffkernes an dem Endstück ein konisch umlaufender Abschnitt hergestellt, dessen Durchmesser in Richtung der Werkzeugspitze hin zunimmt. Dieser Absatz sitzt während des zweiten Verfahrensschrittes in einem entsprechenden Abschnitt der Ausnehmung der zweiten Form ein. Dabei bilden die aneinander anliegenden Kegelflächen eine Dichtung für den Weichkunststoff. Darüber hinaus wird die Selbstzentrierung des Griffkernes in der zweiten Form durch die kegelige Abflachung des Endstückes unterstützt. Eine weitere Zentrierung kann über die im Griffkern eingespritzte Klinge erfolgen, für die eine abdichtende Durchführung an der zweiten Form vorgesehen sein kann.

Ein Eindringen von Weichkunststoff in die Ausnehmung im Bereich der Teilungsnähte der zweiten Form kann zusätzlich dadurch ausgeschlossen werden, daß die konkave Ausnehmung der zweiten Form zur Aufnahme des Endstückes des Griffkernes nahtfrei in der Stirnseite eines Formkernes eingeformt ist.

Schließlich kann das Ausformen von dem fertig hergestellten Griffkern oder dem fertig hergestellten Handgriff dadurch erleichtert werden, daß der Formkern der ersten und/oder zweiten Form axial verschiebbar ist.

Ein Werkzeug zur Durchführung des erfindungsgemäßen Verfahrens mit einem längsgeteilten Formkörper, dessen symmetrische Formhälften einander zugeordnete Ausnehmungen aufweisen, welche bei zusammengefügtem Formkörper eine hohle Form für den in die Form eingespritzten Kunststoff bilden, ist dadurch gekennzeichnet, daß die Formhälften an verschiebbaren Backen ausgebildet sind, welche gemeinsam in die Aufnahme eines Halters einschiebbar sind, die an ihrer dem Ende der Formhälften zugeordneten Begrenzungswand eine Ausnehmung faßt, in der lösbar ein Formstück mit einer in seiner Stirnseite eingeformten nahtfreien Ausnehmung für das Endstück des Kernes einsitzt.

Eine vorteilhafte Ausgestaltung des erfindungsgemäßen Werkzeuges, die besonders für die automatische Herstellung der Werkzeughandgriffe nach dem erfindungsgemäßen Verfahren geeignet ist, ist dadurch gekennzeichnet, daß die Backen durch an dem Kalter ausgebildete Führungen während des Ausziehens und Einschiebens geführt sind. Darüber hinaus können die Backen mit den Formhälften mittels einer gemeinsamen Zugeinrichtung verschiebbar sein.

Nachfolgend wird die Erfindung anhand einer ein Ausführungsbeispiel zeigenden Zeichnung näher erläutert.

Es zeigen:
- Figur 1: einen Schraubendreher mit einem nach dem erfindungsgemäßen Verfahren hergestellten Handgriff in teilweise aufgebrochener Aufsicht,
- Figur 2: den Schraubendreher nach Figur 1 im axialen Längsschnitt entlang der Schnittlinie I-I der Figur 1,
- Figur 3: eine erste Form zur Herstellung eines Griffkernes des in den Figuren 1 und 2 gezeigten Handgriffes im axialen Schnitt,
- Figur 4: den fertig hergestellten Griffkern des Handgriffes nach Figur 1 und 2 beim Abheben des Formkernes der ersten Form im axialen Schnitt,
- Figur 5: den Schraubendreher gemäß Figur 1 und 2 beim Ummanteln des Griffkernes mit Weichkunststoff in einer zweiten Form im axialen Schnitt,
- Figur 6: ein Werkzeug zur Durchführung des erfindungsgemäßen Verfahrens im geöffneten Zustand in Aufsicht,
- Figur 7: das Werkzeug nach Figur 6 im geschlossenen Zustand.

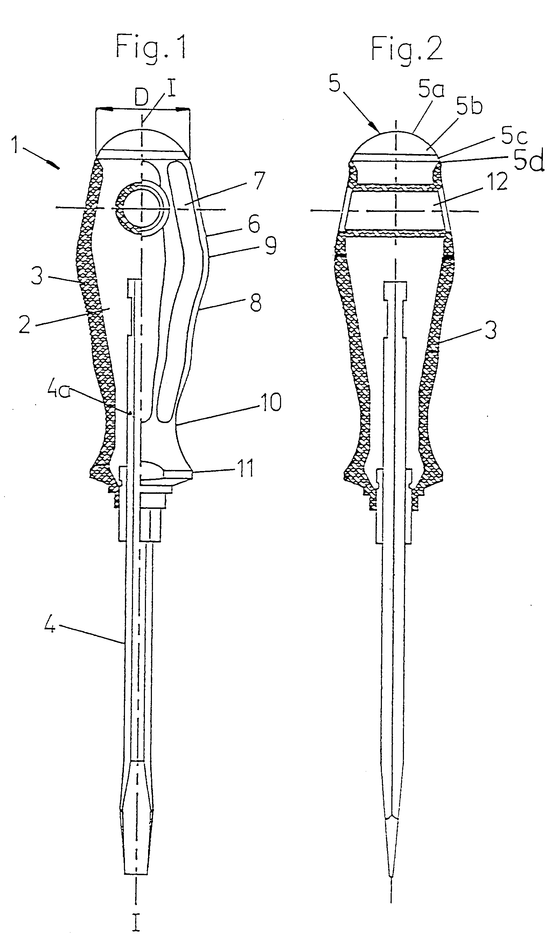

Der Schraubendreher gemäß Figur 1 und 2 weist einen Werkzeughandgriff 1 mit einem Griffkern 2 aus Hartkunststoff, beispielsweise Polypropylen, und eine stoffschlüssig und unlösbar mit dem Griffkern 2 verbundende Ummantelung 3 aus Weichkunststoff, beispielsweise einem thermoplastischen Elastomer mit einer Härte von 60-80 SHORE auf. In dem Griffkern 2 steckt eine Schraubendreherklinge 4.

Der Griffkern 2 weist eine annähernd rotations-ellipsoide Form auf, deren größter Durchmesser in der oberen Hälfte des Griffkernes 2 angeordnet ist. Am oberen Ende des Griffkernes 2 ist einstückig ein balliges Endstück 5 mit einer glatten Stützfläche 5a angeformt, die frei von Gußgraten oder -nähten ist. Das ballige Endstück 5 weist einen oberen kalottenförmigen Abschnitt 5b auf, dessen Randbereich 5c kegelstumpfförmig abgeflacht ist.

Der Griffkern 2 ist vollständig von der Ummantelung 3 umhüllt. Die Ummantelung 3 liegt mit ausreichender Dicke bündig am Rand 5d des Endstückes 5 an.

In der Oberfläche 6 der Ummantelung 3 sind mehrere in Umfangsrichtung gerade Flächenabschnitte 7 ausgebildet, die sich in axialer Längsrichtung vom oberen zum unteren Ende der Ummantelung 3 erstrecken. In der Oberfläche 6 und den Flächenabschnitten 7 zwischen dem Bereich 9 und dem größten Durchmesser und einem klingenseitigen Kragenbereich 11 sind axial aufeinanderfolgend um die Ummantelung 3 umlaufende Griffmulden 8,10 ausgeformt. Ein durchgehendes Querloch 12 ist im oberen Bereich des Handgriffes 1 ausgeformt.

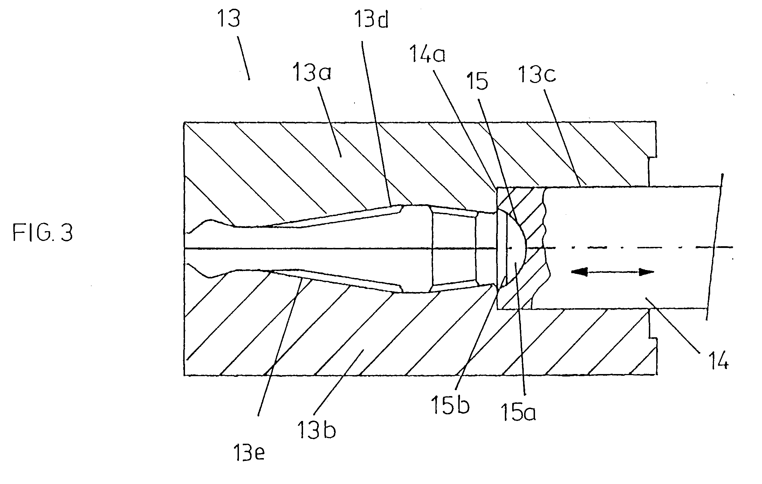

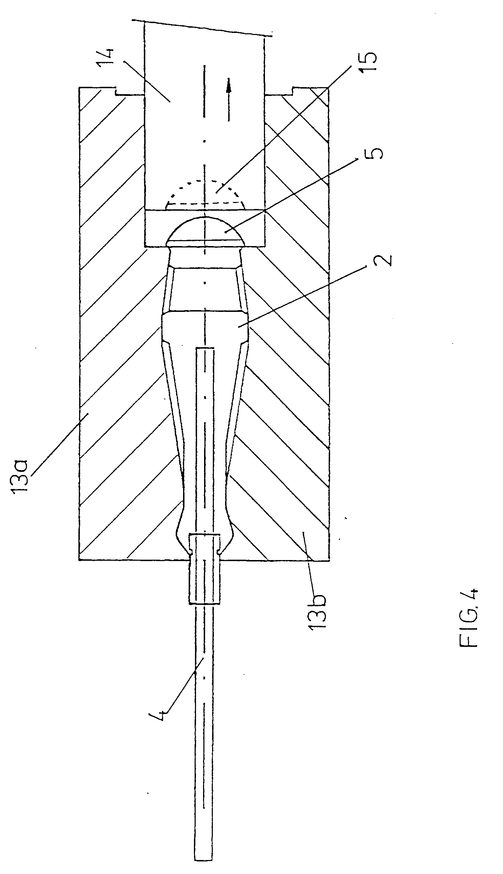

Das in Figur 3 und 4 gezeigte Werkzeug zur Herstellung des Griffkernes des beschriebenen Schraubendrehers 1 weist eine obere 13a und eine untere Formhälfte 13b auf, an deren einem stirnseitigen Ende jeweils eine Ausnehmung 13c in Form eines Halbzylinders eingelassen ist. Bei geschlossener Form 13 bilden die Ausnehmungen 13c der Formhälften 13a,13b eine Führung für einen axial verschiebbaren Formkern 14, in dessen Stirnseite 14a eine konkave, nahtlose Ausnehmung 15 zur Ausformung des Endstückes 5 an dem Griffkern 2 eingeformt ist. Die Ausnehmung weist einen kalottenförmigen hinteren Abschnitt 15a und einen kegelstumpfförmigen vorderen Abschnitt 15b zur Ausformung des abgeflachten, kegelstumpfförmigen Randbereiches 5c an dem Endstück 5 auf. Vertiefungen 13d,e der Formhälften 13a,b bilden zusammen mit der Ausnehmung 15 des in die Form eingeschobenen Formkernes 14 und einem nicht dargestellten Kern für das Querloch 12 eine Spritzgußhohlform für den Griffkern 2.

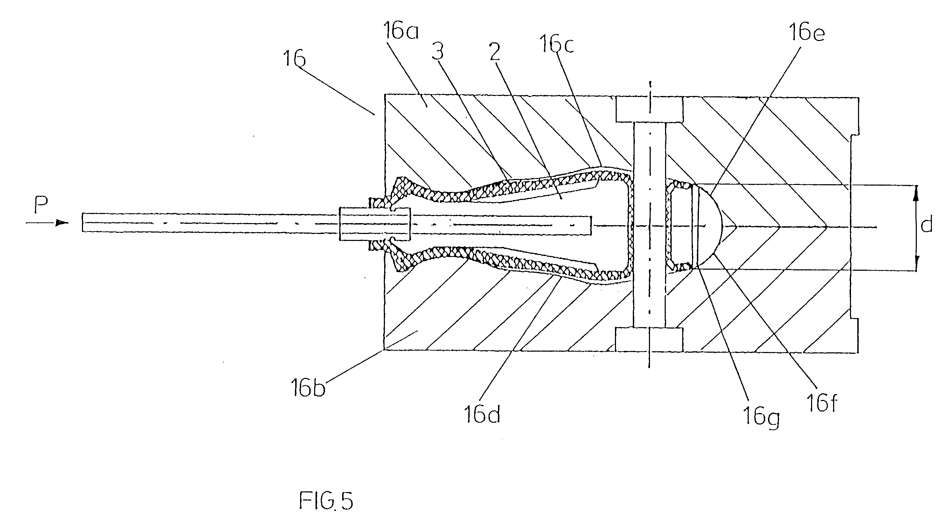

Die in Figur 5 gezeigte zweite Form 16 zur Ummantelung des Griffkernes 2 mit Weichkunststoff ist in axialer Längsrichtung in zwei Formhälften 16a,b geteilt. In den Formhälften 16a,b sind jeweils Ausnehmungen 16c,d angeformt, durch die die Außenkontur des Handgriffes 1 bestimmt ist. Die Ausnehmungen 16c,d münden in jeweils einer konkaven Halbschale 16e,f, die bei aufeinandergesetzten Formhälften 16a,b eine konkave Ausnehmung bilden, in der das Endstück 5 des Griffkernes 2 während des Ummantelns mit Weichkunststoff bündig einsitzt. Gegenüber dem größten Durchmesser d der so gebildeten konkaven Ausnehmung sollte das Endstück 5 im Bereich seines größten Durchmessers D ein geringes Übermaß aufweisen.

Zur Herstellung des Werkzeughandgriffes gemäß dem erfindungsgemäßen Verfahren wird die erste Form 13 nach dem Einlegen der Werkzeugklinge 4 geschlossen und der Formkern 14 eingeschoben. Anschließend wird der Hartkunststoff für den Griffkern 2 in die Form 13 über nicht gezeigte Einlaßkanäle eingespritzt. Nach dem Aushärten des Griffkerns 2 wird der Formkern 14 zurückgezogen, die Form 13 geöffnet und der Griffkern 2 mit seinem angeformten nahtlosen Endstück 5 entnommen.

Im zweiten Verfahrensschritt wird der Griffkern 2 in die zweite Form 16 eingelegt und diese geschlossen. Dabei wird das Endstück 5 durch eine in axialer Längsrichtung des Griffkernes 2 wirkende Druckkraft P in die durch die konkaven Halbschalen 16e,f gebildete Ausnehmung gedrückt, so daß sich der Griffkern 2 aufgrund der Kalottenform des Endstückes 5 selbsttätig zentriert. Dieses Zentrieren wird zusätzlich durch den kegelstumpfförmigen Bereich 5c des Endstückes 5 unterstützt. Sobald der Griffkern 2 in der Form 16 ausgerichtet ist, bilden die flächig an dem entsprechend ausgebildeten Abschnitt 16g anliegenden Außenflächen des kegelstumpfförmigen Bereiches 5c eine Dichtung gegen den Weichkunststoff für die Ummantelung 3, der anschließend in die zweite Form 16 über nicht gezeigte Kanäle eingespritzt wird. Die Dichtwirkung wird zusätzlich durch die axial wirksame Druckkraft unterstützt, durch die das Endstück in die Ausnehmung der zweiten Form hineingedrückt wird. Auf diese Weise ist sichergestellt, daß die Stützfläche 5a des Endstückes 5 nicht vom Weichkunststoff benetzt wird.

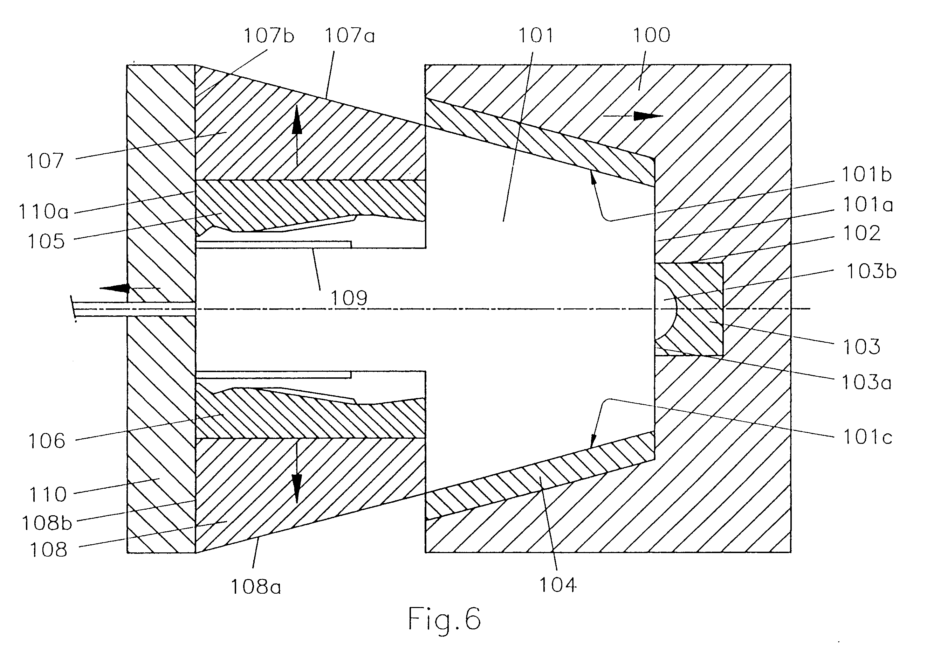

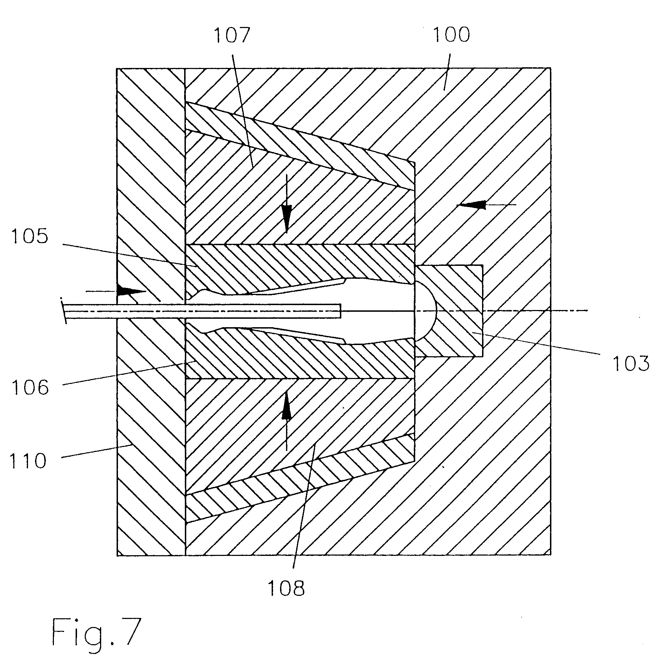

Das in den Figuren 6 und 7 gezeigte Werkzeug weist einen Halter 100 mit einer keilförmigen Aufnahme 101 auf. Aus der rückseitigen Begrenzungswand 101a der Aufnahme 101 ist eine Ausnehmung 102 ausgeformt, in der ein Formstück 103 lösbar derart einsitzt, daß seine Stirnseite 103a bündig mit der Begrenzungswand 101a ausgerichtet ist. Vorzugsweise ist es jedoch wie der Formkern 14 des Ausführungsbeispieles der Figur 3 und 4 beweglich, insbesondere hydraulisch abgestützt. In die Stirnseite 103a des Formstückes 103 ist eine Ausnehmung 103b eingeformt. Führungen 104 sind an den seitlichen Begrenzungswänden 101b,c der Aufnahme 101 ausgebildet.

Formhälften 105,106 eines Formkörpers sind jeweils an einer Backe 107,108 befestigt. Die Backen 107,108 sind mit ihren äußeren Seitenwänden 107a,108a in den Führungen 104 geführt und weisen im zusammengefügten Zustand eine der Form der Aufnahme 101 entsprechende Keilform auf. Die Formhälften 105,106 weisen Vertiefungen 109 auf, die in die einander gegenüberliegenden Wände der Formhälften 105,106 eingeformt sind und im zusammengefügten Zustand der Formhälften 105,106 eine hohle Form bilden. Diese hohle Form kann im ersten Schritt des erfindungsgemäßen Verfahrens zur Ausformung des Griffkernes und nach einem Werkzeugwechsel im zweiten Arbeitsschritt zur Ummantelung des Griffkernes mit Weichkunststoff dienen. An ihren Stirnseiten 107b,108b sind die Backen 107,108 über nicht gezeigte Führungselemente mit einer gemeinsamen Zugeinrichtung 110 derart verbunden, daß sie parallel zu deren Stirnseite 110a verschiebbar sind Um das Ausziehen und Einschieben der Backen 107,108 in die Aufnahme 101 zu beschleunigen, kann auch der Halter 100 selbst axial verschiebbar sein.

Zum Herstellen des Griffkernes werden die Backen 107,108 mit den Formhälften 105,106 in die Aufnahme 101 eingeschoben. Dabei bewegen sich die Backen, geführt durch die Führung 104, aufgrund der Keilform der Aufnahme 101 aufeinander zu, bis die rückwärtige Begrenzungswand 101a die Aufnahme 101 erreicht und die Formhälften 105,106 bündig aufeinanderliegen. Im ersten Verfahrensschritt bilden die Vertiefungen 109 der Formhälften 105,106 gemeinsam mit der Ausnehmung 103b des mit seiner Stirnseite 103a dicht an die Stirnseiten der Formhälften 105,106 gedrückten, beweglichen Formkernes 103 die hohle Form zur Herstellung des Griffkernes mit einem nahtfreien balligen Endstück. Nach der Herstellung des Griffkernes werden die Backen 107,108 mit der Zugeinrichtung 110 aus dem Halter 100 gezogen. Dann führen die Backen wiederum geführt durch die Führung 104 und die Führungen der Zugeinrichtung eine Spreizbewegung aus, so daß sich die Formhälften 105,106 während des Ausziehens voneinander entfernen. Bei vollständig aus der Aufnahme 101 herausgezogenen Backen 107,108 kann der Griffkern aus der Form entnommen werden. In entsprechender Weise kann das vorangehend beschriebene Werkzeug zur Ummantelung des Griffkernes mit Weichkunststoff nach dem erfindungsgemäßen Verfahren verwendet werden.

## Patentansprüche

1. Verfahren zur Herstellung eines Werkzeughandgriffes (1), insbesondere für einen Schraubendreher, der einen aus Hartkunststoff in einer ersten geteilten Form (13) hergestellten Griffkern (2) mit einem klingenabgewandten, balligen Endstück (5) und eine, den Griffkern (2) ohne das Endstück (5) einschließende Ummantelung (3) aus Weichkunststoff aufweist, in deren Oberfläche mindestens eine Vertiefung, wie eine Griffmulde (8,10), eingeformt ist,
**dadurch gekennzeichnet,**
- daß bei der Herstellung des Griffkerns (2) das ballige Endstück (5) mit Hilfe eines in der ersten Form (13) angeordneten Formkerns (14) geformt wird, der eine in seiner Stirnseite (14a) eingeformte nahtfreie Ausnehmung (15) aufweist,
und
- daß anschließend der Griffkern (2) in einer zweiten axial längsgeteilten Form (16) mit einer dem Endstück (5) angepaßten konkaven Ausnehmung (16e,f) mit dem Weichkunststoff der Ummantelung (3) unter Einwirkung einer zur Ausnehmung (16e,f) gerichteten axialen Druckkraft umspritzt wird, wobei das bündig in der Ausnehmung (16e,f) einsitzende ballige Endstück (5) gegenüber dem Weichkunststoff abgedichtet ist und sich der Hartkunststoff des Griffkerns (2) mit dem Weichkunststoff der Ummantelung (3) während des Umspritzens stoffschlüssig verbindet.

2. Verfahren nach Anspruch 1,
**dadurch gekennzeichnet,** daß der größte Durchmesser (D) des balligen Endstückes (5) um ein geringes Übermaß größer ist, als der entsprechende Durchmesser (d) der konkaven Ausnehmung (16e,f) der zweiten Form (16).

3. Verfahren nach Anspruch 1 oder 2,
**dadurch gekennzeichnet,** daß beim Formen des Endstückes (5) dessen Randbereich (5c) kegelstumpfförmig abgeflacht wird.

4. Verfahren nach einem der vorherigen Ansprüche,
**dadurch gekennzeichnet,** daß die konkave Ausnehmung (16e,f) der zweiten Form (16) zur Aufnahme des Endstückes (5) des Griffkernes (2) nahtfrei in der Stirnseite eines Formkernes eingeformt ist.

5. Verfahren nach einem der vorherigen Ansprüche,
**dadurch gekennzeichnet,** daß der Formkern (14) in der ersten und/oder der zweiten Form (13,16) axial verschiebbar ist.

6. Werkzeug zur Durchführung des Verfahrens nach einem der vorhergehenden Ansprüche, mit einem längsgeteilten Formkörper, dessen symmetrische Formhälften (105,106) einander zugeordnete Ausnehmungen (109) aufweisen, welche bei zusammengefügtem Formkörper eine hohle Form für den in die Form eingespritzten Kunststoff bilden,
**dadurch gekennzeichnet,** daß die Formhälften (105,106) an verschiebbaren Backen (107,108) ausgebildet sind, welche gemeinsam in die Aufnahme (101) eines Halters (100) einschiebbar sind, die an ihrer dem Ende der Formhälften (105,106) zugeordneten Begrenzungswand (101a) eine Ausnehmung (102) faßt, in der lösbar ein Formstück (103) mit einer in seiner Stirnseite (103a) eingeformten nahtfreien Ausnehmung (103b) für das Endstück des Griffkernes (2) einsitzt.

7. Werkzeug nach Anspruch 6,
**dadurch gekennzeichnet,** daß die Backen (107,108) durch an dem Halter (100) ausgebildete Führungen (104) während des Ausziehens und Einschiebens geführt sind.

8. Werkzeug nach Anspruch 6 oder 7,
**dadurch gekennzeichnet,** daß die Backen (107,108) mittels einer gemeinsamen Zugeinrichtung (110) verschiebbar sind.

9. Werkzeughandgriff (1) für einen Schraubendreher, der einen aus Hartkunststoff um dessen Klinge (4) gespritzten Griffkern (2) mit einem klingenabgewandten, balligen Endstück (5) und eine, den Griffkern (2) ohne dessen Endstück (5) einschließende Ummantelung (3) aus Weichkunststoff aufweist, in deren Oberfläche mindestens eine Vertiefung, wie eine Griffmulde (8,10), eingeformt ist,
**dadurch gekennzeichnet,** daß das ballige Endstück (5) des Griffkernes (2) an seiner Stirnseite nahtfrei gespritzt ist und daß der Griffkern (2) mit der Ummantelung (3) aus Weichkunststoff umspritzt und damit stoffschlüssig verbunden ist.

## Claims

1. Process for the production of a tool handle (1), more particularly for a srewdriver, which has a hard plastics handle core (2) produced in a first divided mould (13) and a crowned end member (5) remote from the blade, and a soft plastics jacketing (3) which encloses the handle core (2) without the end member (5) and whose surface is formed with at least one depression, such as a handle recess (8,10), characterized in
- that in the production of the handle core (2) the crowned end member (5) is moulded by means of a mould core (14) which is disposed in the first mould (13) and whose end face is formed with a seamless recess (15),
- and that thereafter the handle core (2) is injected around with the soft plastics of the envelope (3), under an axial pressure directed towards a concave recess (16e,f) adapted to the end member (5) in a second axially longitudinally divided mould (16), the crowned end member (5), disposed flush in said recess (16e,f), being sealed off from the soft plastics, and the hard plastics of the handle core (2) being connected by self-substance to the soft plastics of the jacketing (3) as it is being injected around.

2. A process according to claim 1, characterized in that the maximum diameter (D) of the crowned end member (5) is larger by a small overdimension than the corresponding diameter (d) of the concave recess (16e,f) of the second mould (16).

3. A process according to claims 1 or 2, characterized in that during the moulding of the end member (5) its edge zone (5c) is flattened frustoconically.

4. A process according to one of the preceding claims, characterized in that the concave recess (16e,f) of the second mould (16) for receiving the end member (5) of the handle core (2) is formed seamlessly in the end face of a mould core.

5. A process according to one of the preceding claims, characterized in that the mould core (14) is axially displaceable in the first and/or the second mould (13).

6. A tool for the performance of the process according to one of the preceding claims, having a longitudinally divided mould member whose symmetrical mould halves (105, 106) have recesses (109) associated with one another which, when the mould member is joined together, form a hollow mould for the plastics injected into the mould, characterized in that the mould halves (105, 106) are constructed on displaceable jaws (107, 108) which can be inserted together into the receiving portion (101) of a holder (100) whose boundary wall (101a) associated with the end of the mould halves (105, 106) has a recess (102) in which a mould member (103) is releasably disposed whose end face (103a) is formed with a seamless recess (103b) for the end member of the core.

7. A tool according to claim 6, characterized in that during withdrawal and insertion the jaws (107, 108) are guided by guides (104) disposed on the holder (100).

8. A tool according to claims 6 or 7, characterized in that the jaws (107, 108) can be displaced by means of a common pulling device (110).

9. A tool handle (1) for a screwdriver which has a hard plastics handle core (2) injected around the screwdriver blade (4) and having a crowned end member (5) remote from the blade, and a soft plastics jacketing (3) which encloses the handle core (2) without the end member (5) and whose surface is formed with at least one depression, such as a handle recess (8, 10), characterized in that the crowned end member (5) of the handle core (2) is injected seamlessly at its end face (14a), and the handle core (2) with the jacketing (3) is injected around with soft plastics and is connected by self-substance to the jacketing (3).

## Revendications

1. Procédé de fabrication d'une poignée d'outil (1), notamment pour un tournevis, laquelle présente un corps de poignée (2), qui est fabriqué en plastique dur dans un premier moule (13) divisé en deux et qui est doté d'une partie terminale bombée (5) opposée à la lame, et une enveloppe (3) en plastique mou, entourant le corps de poignée (2) sauf la partie terminale (5) et dans la surface de laquelle est formé au moins un renfoncement tel qu'une cuvette de préhension (8, 10), **caractérisé**
- en ce que, lors de la fabrication du corps de poignée (2), la partie terminale bombée (5) est formée à l'aide d'un noyau de moule (14) disposé dans le premier moule (13), noyau qui présente un évidement (15) sas joint formé dans sa face frontale (14a),
- et en ce que le corps de poignée (2) est ensuite, dans un deuxième moule (16) axialement divisé en deux dans sa longueur et présentant un évidement concave (16e,f) adapté à la partie terminale (5), enrobé par injection du plastique mou de l'enveloppe (3) sous l'action d'une force de pression axiale dirigée vers l'évidement (16e,f), la partie terminale bombée (5) logée en affleurement dans l'évidement (16e,f) étant isolée du plastique mou et le plastique dur du corps de poignée (2) s'assemblant par liaison de matière au plastique mou de l'enveloppe (3) pendant l'enrobage par injection.

2. Procédé selon la revendication 1, **caractérisé** en ce que le plus grand diamètre (D) de la partie terminale bombée (5) est supérieur d'une légère surcote au diamètre correspondant (d) de l'évidement concave (16e,f) du deuxième moule (16).

3. Procédé selon la revendication 1 ou 2, **caractérisé** en ce que, lors du moulage de la partie terminale (5), sa zone de bord (5c) est aplatie en forme de tronc de cône.

4. Procédé selon l'une quelconque des revendications précédentes, **caractérisé** en ce que l'évidement concave (16e,f) du deuxième moule (16), destiné à recevoir la partie terminale (5) du corps de poignée (2), est formé sans joint dans la face frontale d'un noyau de moule.

5. Procédé selon l'une quelconque des revendications précédentes, **caractérisé** en ce que le noyau de moule (14) est mobile en coulissement axial dans le premier et/ou le deuxième moule (13, 16).

6. Dispositif pour la mise en oeuvre du procédé selon l'une quelconque des revendications précédentes, avec un corps de moule longitudinalement divisé en deux, dont les demi-moules symétriques (105, 106) présentent des évidements mutuellement associés (109) qui, lorsque le corps de moule est assemblé, forment un morne creux pour la matière plastique injectée dans le moule, **caractérisé** en ce que les demi-moules (105, 106) sont configurés sur des mors mobiles en coulissement (107, 108) qui peuvent être conjointement enfilés dans la partie réceptrice (101) d'un support (100) qui comprend un évidement (102) sur sa paroi de délimitation (101a) associée à l'extrémité des demi-moules (105, 106), évidement dans lequel est logée de manière amovible une pièce façonnée (103) dotée d'un évidement sans joint (103b), formé dans sa face frontale (103a) et prévu pour la partie terminale du corps de poignée.

7. Dispositif selon la revendication 6, **caractérisé** en ce que les mors (107, 108) sont, lors de l'extraction et de l'enfilage, guidés par des glissières (104) configurées sur le support (100).

8. Dispositif selon la revendication 6 ou 7, **caractérisé** en ce que les mors (107, 108) peuvent être déplacés au moyen d'un mécanisme de traction commun (110).

9. Poignée d'outil (1) pour un tournevis, laquelle présente un corps de poignée (2), qui est moulé par injection de plastique dur autour de la lame (4) du tournevis et qui est doté d'une partie terminale bombée (5) opposée à la lame, et une enveloppe (3) en plastique mou, entourant le corps de poignée (2) sauf la partie terminale (5) et dans la surface de laquelle est formé au moins un renfoncement tel qu'une cuvette de préhension (8, 10), **caractérisée** en ce que la partie terminale bombée (5) est moulée par injection sans joint sur la face frontale du corps de poignée (2), et en ce que le corps de poignée (2) est enrobé de l'enveloppe (3) par injection de plastique mou et est ainsi assemblé à l'enveloppe (3) par liaison de matière.
